(19) Europäisches Patentamt
European Patent Office
Office européen des brevets

(11) **EP 2 629 516 B1**

(12) **EUROPEAN PATENT SPECIFICATION**

(45) Date of publication and mention
of the grant of the patent:
**22.03.2017 Bulletin 2017/12**

(51) Int Cl.:
*H04N 7/18* *(2006.01)*          *G06T 7/00* *(2017.01)*
*G06F 17/30* *(2006.01)*       *G08B 13/196* *(2006.01)*
*G06K 9/00* *(2006.01)*

(21) Application number: **10858431.9**

(22) Date of filing: **11.10.2010**

(86) International application number:
**PCT/KR2010/006929**

(87) International publication number:
**WO 2012/050244 (19.04.2012 Gazette 2012/16)**

(54) **IMAGE-MONITORING DEVICE AND METHOD FOR SEARCHING FOR OBJECTS THEREFOR**

BILDÜBERWACHUNGSVORRICHTUNG UND VERFAHREN ZUR SUCHE VON OBJEKTEN DAFÜR

DISPOSITIF DE SURVEILLANCE D'IMAGE ET SON PROCÉDÉ DE RECHERCHE D'OBJETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.08.2013 Bulletin 2013/34**

(73) Proprietor: **LG Electronics Inc.**
**Yeongdeungpo-gu**
**Seoul 150-721 (KR)**

(72) Inventors:
• **YOON, Hyounghwa**
**Seoul 140-748 (KR)**
• **PARK, Youngkyung**
**Seoul 156-010 (KR)**
• **YU, Jaeshin**
**Uiwang-si**
**Gyeonggi-do 437-758 (KR)**
• **KIM, Sungjin**
**Anyang-si**
**Gyeonggi-do 431-080 (KR)**

(74) Representative: **Cabinet Plasseraud**
**66 rue de la Chaussée d'Antin**
**75440 Paris Cedex 09 (FR)**

(56) References cited:
KR-A- 20070 030 555     KR-A- 20070 038 227
KR-A- 20100 033 863     US-A1- 2009 136 141

## Description

[Technical Field]

The present invention relates to an image monitoring device and a method for searching an object of an image detecting device, and more particularly, to an image monitoring device for searching an object detected from a monitored image and a method for searching an object in such an image monitoring device.

[Background Art]

In general, various monitoring methods and various monitoring devices have been used for security, or the like. One of the monitoring devices is a monitoring system for monitoring and analyzing a monitored image obtained through a monitoring camera. In a monitoring system, a monitoring camera is installed in the vicinity of a monitoring area and an image obtained through the monitoring camera is provided to a user so that the user may easily recognize whether a particular object is detected from the monitored image. US2009/0136141 discloses a system for analyzing video for the detection of objects within the video. Objects are detected by the comparison of portions of the video with a reference portion.

[Disclosure]

[Technical Problem]

Therefore, an object of the present invention is to provide an image monitoring device capable of searching an object on the basis of a statistical model with respect to the characteristics of an object detected from a monitored image to thereby provide an object search function resistant to a variation in the characteristics of an object according to a monitored environment, and a method for searching an object thereof.

[Technical Solution]

According to an aspect of the present invention, there is provided a method for searching an object according to claim 1.

Also, in an embodiment of the present invention, the method may further include: inputting information regarding a time for searching from the monitored image, before the displaying of the characteristic values and the detection frequencies on the first region, wherein in the displaying of the characteristic values and the detection frequencies on the first region, the detection frequencies of the object having the input characteristic values may be distinguishably displayed on the first region on the basis of the input time information.

Also, in an embodiment of the present invention, the method may further include: inputting information regarding a region to be searched from the monitored image, before the displaying of the characteristic values and the defection frequencies on the first region, wherein in the displaying of the characteristic values and the detection frequency on the first region, the detection frequency of the object having the input characteristic value may be distinguishably displayed on the first region on the basis of the input region information.

Also, in an embodiment of the present invention, the method may further include: displaying the monitored image in a third region, before the inputting of the characteristic values, wherein the inputting of the characteristic values may include calculating a characteristic value of an object selected from objects detected in the third region.

Also, in an embodiment of the present invention, the method may further include: storing the detection frequencies with respect to the characteristic value of the object detected from the monitored image, before the displaying of the characteristic values and the detection frequencies on the first region.

Also, in an embodiment of the present invention, the characteristic value may include a velocity of the object detected from the monitored image.

Also, in an embodiment of the present invention, in the displaying of the characteristic values and the detection frequencies on the first region, the characteristic values and the detection frequencies may be displayed as a graph on the first region.

Also, in an embodiment of the present invention, the displaying of the searched frame on the second region may be displaying a frame selected from the searched frames.

Also, in an embodiment of the present invention, the frame displayed on the second region may be a thumbnail image.

Also, in an embodiment of the present invention, the method may further include: displaying an image in relation to a thumbnail image selected from the thumbnail images.

According to another aspect of the present invention, there is provided an image monitoring device according to claim 11.

[Advantageous Effects]

According to embodiments of the present invention, a user can effectively filter the characteristics of an object desired to be searched on the basis of statistical data with respect to the characteristics of an object detected from a monitored image. Thus, accuracy in searching an interested object can be enhanced, and thus, a user can easily perform searching and an installation environment for a monitoring camera resistant to a change in characteristics can be provided.

[Description of Drawings]

FIG. 1 is a view illustrating an image monitoring system according to an embodiment of the present invention.

FIG. 2 is a block diagram of an image monitoring device according to an embodiment of the present invention.

FIGS. 3(a) and 3(b) are views illustrating structures of image data and meta data according to an embodiment of the present invention.

FIG. 4 is a view illustrating a structure of a characteristic information table according to an embodiment of the present invention.

FIG. 5 is a flow chart illustrating a process of searching an object according to an example useful for understanding the present invention.

FIG. 6 is a view illustrating an object search screen according to an example useful for understanding the present invention.

FIG. 7 is a flow chart illustrating a process of searching an object according to an embodiment of the present invention.

FIG. 8 illustrates an object search screen according to an example useful for understanding the invention

FIG. 9 illustrates an object search screen according to an embodiment of the present invention.

FIG. 10 is a flow chart illustrating a process of searching an object according to an example useful for understanding the present invention.

FIG. 11 is a view illustrating an object search screen according to an example useful for understanding the present invention.

FIG. 12 is a flow chart illustrating a process of searching an object according to an example useful for understanding the present invention

FIG. 13 is a view illustrating an object search screen according to an example useful for understanding the present invention.

[Best Modes]

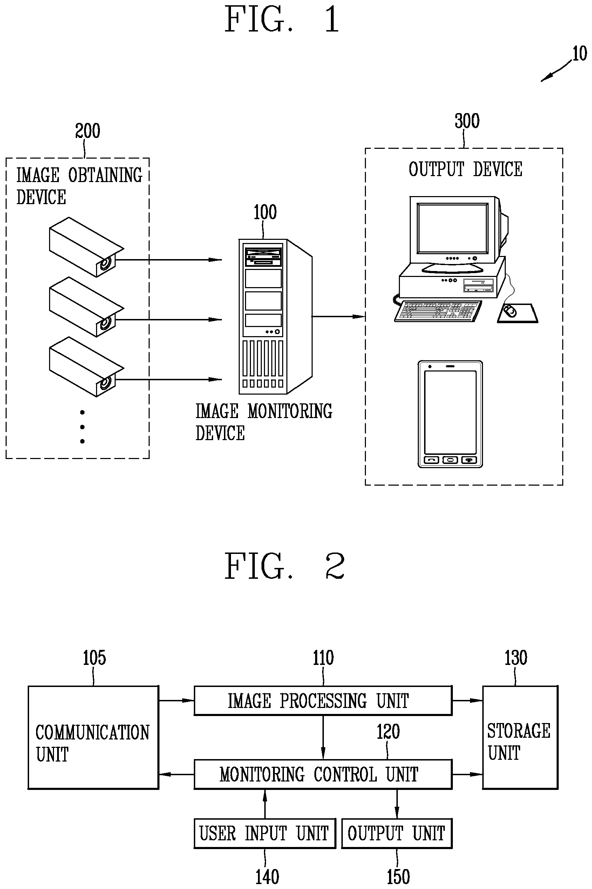

Hereinafter, an image monitoring device and a method for searching an object thereof according to according to embodiments of the present invention will be described with reference to FIGS. 1 through 13.

Definition

A term 'object' described in the present disclosure refers to a person, a thing or the like, as a monitoring target in a monitored image. For example, a person or a thing determined to move may be an object.

Also, a term 'event' described in the present disclosure refers to an event or facts that may occur in a monitored image. Also, a term 'monitoring event' refers to an event which is set for effectively achieving a monitoring purpose by the user.

Description of image monitoring system

FIG. 1 is a view illustrating an image monitoring system according to an embodiment of the present invention. An image monitoring system 10 according to an embodiment of the present invention obtains a monitored image through one or more image obtaining devices 200, processing and analyzing the obtained monitored images, and provides the processing and analysis results to a user through an output device 300. The image monitoring system 10 may include an image monitoring device, the image obtaining device 200, and the output device 300.

The image monitoring device 100 analyzes an image obtained through the image obtaining device 200 to generate a compressed image and meta data. Also, the image monitoring device 100 searches meta data for detecting an occurrence of a monitoring event set in a monitored image, and when an occurrence of the monitoring event is detected, the image monitoring device 100 outputs information regarding the detected occurrence of the monitoring event to the output device 300.

In an embodiment, information regarding the detected occurrence of the monitoring event may include a warning message. Also, the meta data may include an ID of an object, a type (e.g., a person, a stuff, or the like) of the object, a time stamp, a current location of the image obtaining device 200, a previous location of the image obtaining device 200, direction data, and the like.

The image obtaining device 200 obtains a monitored image in a monitored environment. The image obtaining device 200 may include a camera (e.g., an optical sensor, a still camera, an analog image camera, a digital image camera, and the like).

The output device 300 may output the processing and analysis results of the monitored image received from the image monitoring device 100 and the information regarding the occurrence of the monitoring event detected from the monitored image. The output device 300 may be a terminal, a network computer, a wireless device (e.g., a PDA), a wireless phone, an information home appliance, a work station, a mini-computer, a main frame computer, a multi-purpose computer, a hardware device dedicated to the image monitoring system 10, or the like.

In an embodiment, a user may remotely receive the processing and analysis results of the monitored image by the output device 300 having a text, messaging, and image function. Also, the user may receive a warning message generated by the image monitoring device 100 by the output device 300. In an embodiment, the warning message may include an image.

Also, the output device 300 may sound an alarm on the basis of the warning message. Alternatively, the output device 300 may transmit a text message by using a previously registered phone number, output a previously stored voice by dialing the phone number, or converting previously stored text into voice and outputting the same, to inform the user that the monitoring event has occurred. The conversion of text into voice may be performed by using a text-to-speech (TTS) technique. Alternatively, the output device 300 may flicker a monitoring item corresponding to a region in which the monitoring event has occurred, to allow the user easily recognize where the monitoring event has occurred.

In this manner, when the image monitoring system 10 sets a monitoring event, and when the monitoring event occurs, the image monitoring system 10 informs the user accordingly. Thus, although the monitoring region is wide, the user can easily do monitoring activities. Also, the image monitoring system 10 may store a monitored image when a pre-set monitoring event occurs, rather than storing all the monitored images. However, even in the case in which a monitoring event is set, the image monitoring system 10 may store a monitored image although a monitoring event does not occur (i.e., regardless of whether or not a monitoring event occurs).

Description of image monitoring device

FIG. 2 is a block diagram of an image monitoring device according to an embodiment of the present invention. The image monitoring device 100 according to an embodiment of the present invention includes a communication unit 105, an image processing unit 110, a monitoring control unit 120, and a storage unit 130.

In order to allow the image monitoring device 100 to communicate with the image obtaining device 200 and/or the output device 300, the communication unit 105 may perform modulation/demodulation and coding/decoding operation on signals transmitted and received to and from the image obtaining device 200 and/or the output device 300. The communication unit 105 may transmit and receive image signals or data to and from the image obtaining device 200 and/or the output device 300 through various communication paths such as a local area network (LAN), a wide area network (WAN, e.g., T1, T3, 56 kb, X.25, ISDM, Frame-Relay, ATM), a wireless network (802.11, Bluetooth™, or the like), universal serial bus (USB), an IEEE 1394 (FireWire), or the like.

The image processing unit 110 analyzes an image obtained from the image obtaining device 200 and generates compressed image data and meta data. The image processing unit 110 stores the generated image data in the storage unit 130, and outputs the meta data to the monitoring control unit 120.

In order to detect an occurrence of a monitoring event set in a monitored image, the monitoring control unit 120 may search the meta data received from the image processing unit 110, and when an occurrence of a monitoring event is detected, the monitoring control unit 120 outputs information regarding the detected occurrence of a monitoring event to the output device 300. Also, the monitoring control unit 120 stores the meta data and the information regarding the detected occurrence of the monitoring event in the storage unit 130.

The storage unit 130 stores an objected image through the image obtaining device 200. The storage unit 130 includes a video cassette recorder (VCR), a digital video recorder (VDR), a redundant array of independent disk (RAID) array, a universal serial bus (USB) hard drive, an optical disk recorder, a flash storage device, an image analyzing device, a multi-purpose computer, a multi-dimensional imaging device, a deinterlacer, a scaler, and/or a processing and storing element for storing and/or processing an image.

The monitored image may be obtained in various analog and/or digital formats. For example, the monitored image may include a non-compressed digital signal using an NTSC (Nation Television System Committee), PAL (Phase Alternating Line), SECAM (Sequential Color with Memory), DVI (Digital Video/visual Interactive), or HDMI (High-Definition Multimedia Interface) connection, and/or a digital signal compressed on the basis of a codec format (e.g., MPEG, MPEG2, MPEG4, or H.264).

Also, the storage unit 130 may store meta data and information regarding a detected occurrence of monitoring event under the control of the monitoring control unit 120.

Meanwhile, the image monitoring device 100 may further include: a user input unit 140 and an output unit 150.

The user input unit 140 may receive an input command applied by the user to control an operation of the image monitoring device 100, and delivers the received command to the monitoring control unit 120 to allow the monitoring control unit 120 to operate according to the command. The user input unit 140 may include a key pad, a dome switch, a touch pad (e.g., static pressure/capacitance), a jog wheel, a jog switch, and the like.

The output unit 150 serves to output an image signal or an alarm signal. The output unit 150 may include a display unit (not shown) outputting the processing and analysis results of a monitored image in the image monitoring device 100 and information regarding a detected occurrence of a monitoring event, an audio output module (not shown), and an alarm unit (not shown) that sounds an alarm on the basis of an alarm message generated by the monitoring control unit 120.

According to an embodiment of the present invention, the monitoring control unit 120 detects an object by frames in the monitored image obtained by the image obtaining device 200. Also, the monitoring control unit 120 calculates a characteristic value of the detected object, and records identification information of frames in which the object was detected, such that the identification information of the frames corresponds to the calculated characteristic value of the object. Also, the monitoring control unit 120 accumulatively records a number of times of detecting the object having the calculated characteristic value in the meta data. The meta data recorded in this manner includes the number of times of detecting the object having a unique characteristic value from the monitored image so far and identification information of the frames in which the object having the unique characteristic value was detected. The monitoring control unit 120 stores the meta data in the storage unit 130.

The monitoring control unit 120 displays a characteristic value of an object detected from a monitored image stored in the storage unit 130 and a detection frequency of the object having the characteristic value on a first region of the display unit. The monitoring control unit 120 reads the number of times of detecting each object having a unique characteristic value from the meta data stored in the storage unit 130. Also, the monitoring control unit 120 generates a detection frequency of each object having a unique characteristic value by normalizing or regularizing the read number of times of detection. The monitoring control unit 120 displays the generated detection frequencies according to respective unique characteristic values of the respective objects on the display unit. In this case, the detection frequencies of the respective objects having a unique characteristic value may be displayed as a graph.

Here, the detection frequency is a value obtained by normalizing the number of times of detection. For example, when an object having a first characteristic value is detected from a monitored image fifty times and an object having a second characteristic value is detected a hundred times, a detection frequency of the object having the first characteristic value is 1 as a value obtained by dividing the number of times of detection by 50 and a detection frequency of the object having the second characteristic value is 2 as a value obtained by dividing the number of times of detection by 50.

The monitoring control unit 120 may search a frame in which an object having a characteristic value selected from among characteristic values displayed on the first region of the display unit is detected from the monitored image stored in the storage unit 130. The monitoring control unit 120 receives an input of selecting one or more of the characteristic values displayed on the first region from the user through the user input unit 140. The monitoring control unit 120 reads identification information of the frame in which the object having the selected characteristic value was detected, from the meta data stored in the storage unit 130.

The monitoring control unit 120 may display the searched frame in a second region of the display unit. Namely, the monitoring control unit 120 extracts a frame corresponding to the identification information of the frame read from the meta data, from the image data stored in the storage unit 130. The monitoring control unit 120 may display the extracted frame on the second region of the display unit.

Here, the frame displayed on the second region may be at least one or more frames, and in this case, the at least one or more frames may be thumbnail images representing an array of images displayed until when the object moves out of the monitored image after the object was detected from the monitored image. Also, when one or more of the thumbnail images displayed on the second region is/are selected, an array of images representing the selected thumbnail images may be displayed.

Also, the frame displayed on the second region may be a frame selected from the searched frames. When the searched frame is a plurality of temporally continued frames, a frame distinctly expressing the characteristics of the object may be selected as a frame to be displayed on the second region. The frame distinctly expressing the characteristics of the object may be a frame having the highest sharpness with respect to the object.

Structure of image data and meta data

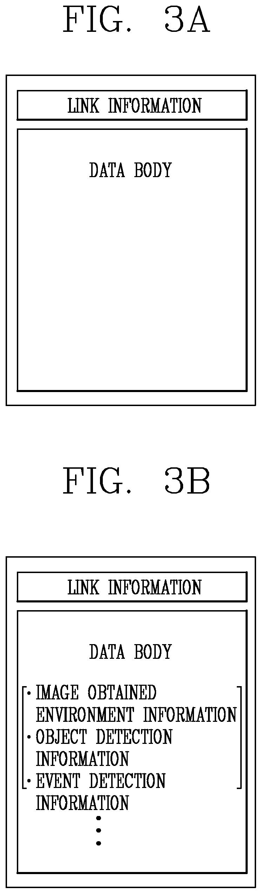

FIGS. 3(a) and 3(b) are views illustrating structures of image data and meta data according to an embodiment of the present invention.

Image data and meta data include link information and a data body, respectively. The data body of the image data is data of a monitored image. Also, data body of meta data includes information indicating a monitoring target and attribute information defining a describing method with respect to the information indicating a monitoring target. Link information includes relevant information indicating relevancy between image data and meta data, and attribute information defining a description method wit respect to content of the relevant information.

Relevant information uses, for example, a time stamp or a sequence number for specifying image data. The time stamp indicates information (time information) indicating a time at which image data was generated. Also, the sequence number refers to information (sequence information) indicating a generation sequence of contents data. When there are a plurality of monitored images having the same time stamp, a generation sequence of the image data having the same time stamp may be identified. Also, the relevant information may include information (e.g., a name of a manufacturer, a name of type, a serial number, or the like) for specifying the image obtaining device.

In order to describe the link information and/or meta data body, a markup language defined to describe information exchanged in the Web may be used. In this manner, the use of mark-up language facilitates exchange of information through a network. In addition, when a markup language, e.g., XML used to exchange documents or electronic data, is used. image data and meta data can be easily exchanged. In case that XML is used, for example, XMLSchema is used as attribute information.

According to an embodiment of the present invention, data body of the meta data may include information regarding an environment in which an image is obtained including a location, an angle, or the like, of the image obtaining device, object detection information including an ID, characteristics, and the like, of a detected object, an event detection information including whether a monitoring event set in a monitored image occurs, and the like.

Structure of characteristic information table

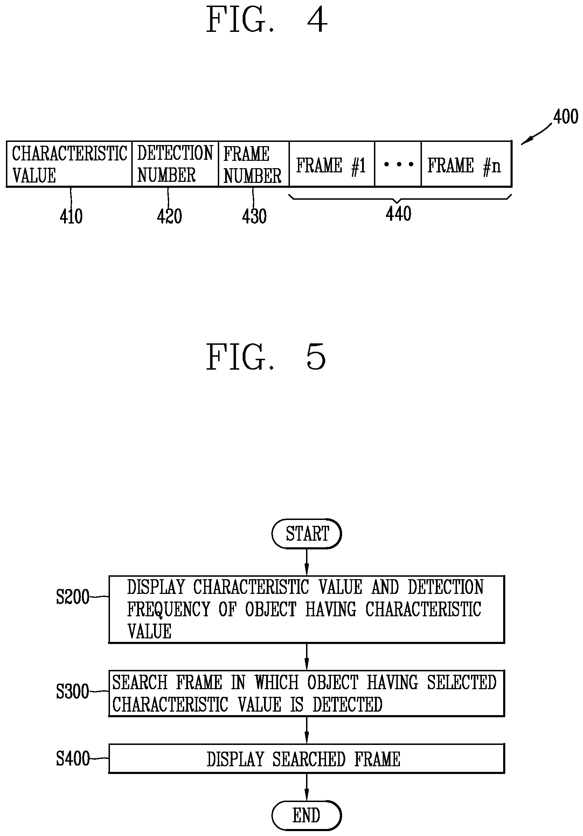

FIG. 4 is a view illustrating a structure of a characteristic information table according to an embodiment of the present invention.

A characteristic information table 400 includes a characteristic value field 410, a detection number field 420, a frame number field 430, and frame identification information field 440. The characteristic value field 410 stores characteristic value of an object.

For example, when characteristics of an object are a size, the characteristic value may be $a_1$, and $a_1$ may be determined by Equation 1 shown below:

$$[\text{Equation 1}]$$

$$a_1 = \frac{p}{m}$$

(p is a number of pixels occupied by an object in a monitored image, and m is a natural number)

Also, when a characteristic value is a velocity, a characteristic value may be $a_2$, and $a_2$ may be determined by Equation 2 shown below:

$$[\text{Equation 2}]$$

$$a_2 = \frac{v}{m}$$

(v is a velocity of an object and m is a natural number)

Also, when a characteristic value is a color, a characteristic value may be $a_3$, and $a_3$ may be determined by Equation 3 shown below:

$$[\text{Equation 3}]$$

$$a_3 = \frac{c}{m}$$

(For example, c is an RGB value of an object and m is a natural number)

Here, m is a factor with respect to precision in searching an object, and as the factor m is reduced, the user can more precisely search an object detected according to characteristic values, and as the factor m is increased, the user may simply search an object detected according to characteristic values.

The detection number field 420 stores the number of times of detecting each object having a unique characteristic value. In a case in which several objects are detected in a single frame, the number corresponding to the several objects may be stored as the number of times of detecting the several objects.

The frame number field 430 is a frame indicating a number of frames in which the object having the corresponding characteristic value is detected, respectively. In a case in which several objects are detected in a single frame, the number of the single frame may be stored as a number of the frame in which objects were detected.

The frame identification information field 440 is a field indicating identification information of frames in which the object having the corresponding characteristic value is detected. It may include identification information regarding a first frame, identification information regarding a second frame, ..., identification information regarding nth frame (n is a natural number).

In an embodiment of the present invention, the characteristic information table 400 is maintained as described above, based on which the monitoring control unit 120 may determine a characteristic value of an object detected in a monitored image and a detection frequency of the object having the characteristic value. For example, the monitoring control unit 120 may determine a detection frequency of the characteristic value with reference to the detection number field 420. Also, the monitoring control unit 120 may search a frame in which an object having a selected characteristic value was detected, from a monitored image. For example, the monitoring control unit 120 may search a frame in which the object having a selected characteristic value is detected, with reference to the identification information field 440 of frames in the characteristic information table 400.

Description of process of researching object

FIG. 5 is a flow chart illustrating a process of searching an object according to an example useful for understanding the present invention.

The monitoring control unit 120 displays a characteristic value with respect to an object detected in a monitored image stored in the storage unit 130 and a detection frequency of the object having the characteristic value on the first region of the display unit (S200). The monitoring control unit 120 reads the number of times of detecting each object having a unique characteristic value from the meta data stored in the storage unit 130. Also, the monitoring control unit 120 generates a detection frequency of each object having a unique characteristic value by normalizing (or regularizing) the read number of times of detection. The monitoring control unit 120 displays the generated detection frequencies according to respective characteristic values on the display unit. In this case, the detection frequencies of the respective objects having a unique characteristic value may be displayed as a graph.

The monitoring control unit 120 searches a frame in which an object having a characteristic value selected from among characteristic values displayed on the first region of the display unit is detected from the monitored image stored in the storage unit 130 (S300). The monitoring control unit 120 receives an input of selecting one or more of the characteristic values displayed on the first region from the user through the user input unit 140. The monitoring control unit 120 reads identification information of the frame in which the object having the selected characteristic value was detected, from the meta data stored in the storage unit 130.

Also, the monitoring control unit 120 displays the searched frame in a second region of the display unit. Namely, the monitoring control unit 120 extracts a frame corresponding to the identification information of the frame read from the meta data, from the image data stored in the storage unit 130. The monitoring control unit 120 may display the extracted frame on the second region of the display unit.

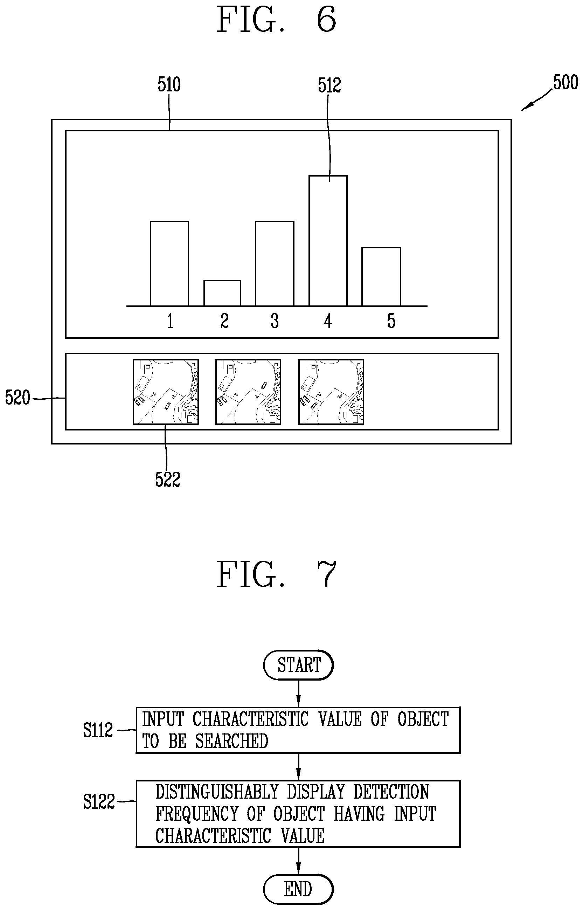

FIG. 6 is a view illustrating an object search screen according to an example useful for understanding the present invention.

An object search screen 500 includes a detection frequency display region 510 and a frame display region 520. A characteristic value of an object detected in a monitored image and a detection frequency of the object having the characteristic value are displayed in the detection frequency display region 510. A frame in which an object having a characteristic value selected from among characteristic values displayed in the detection frequency display region 510 is displayed in the frame display region 520.

In an example, a characteristic value and a detection frequency may be displayed as a graph in the detection frequency display region 510. In the graph, an x-axis may indicate a characteristic value and y-axis may indicate a detection frequency of the object having the corresponding value (or vice versa).

Among the characteristic value items displayed in the detection frequency display region 510, when a particular characteristic value item 512 is selected, frames in which an object having the characteristic value corresponding to the selected item 512 are displayed in the frame display region 520. Also, when a particular frame 522 is selected from among the frames displayed in the frame display region 520, an image in relation to the selected frame is displayed in the region in which the selected frame is displayed.

FIG. 7 is a flow chart illustrating a process of searching an object according to an embodiment of the present invention.

The monitoring control unit 120 receives a characteristic value of an object to be searched in a monitored image (S112). For example, the monitoring control unit 120 may receive a characteristic value of an object to be searched in the monitored image through the user input unit 140. Meanwhile, the characteristic value of the object to be searched in the monitored image may include a plurality of characteristic values.

Also, the monitoring control unit 120 displays the characteristic value of the object detected from the monitored image and a detection frequency of the object having the characteristic value on the display unit. Here, the monitoring control unit 120 distinguishably displays the detection frequency of the object having the input characteristic value (S114). Meanwhile, in a case in which the characteristic value of the object to be seared in the monitored image includes a plurality of characteristic values, the monitoring control unit 120 may distinguishably display the detection frequency of the object having the characteristic value corresponding between the plurality of characteristic values.

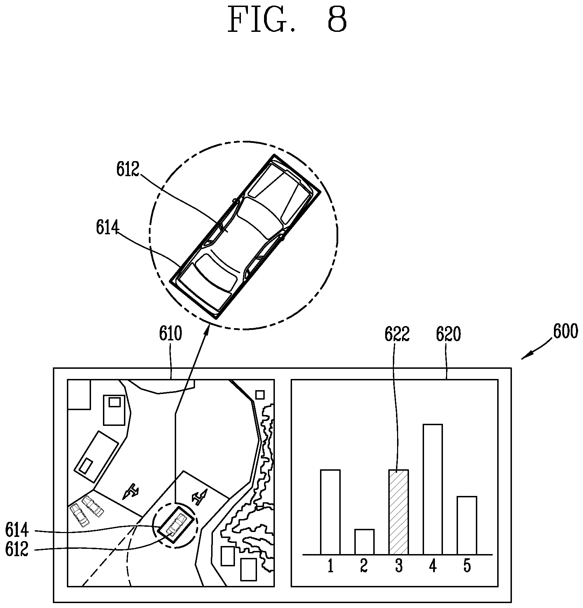

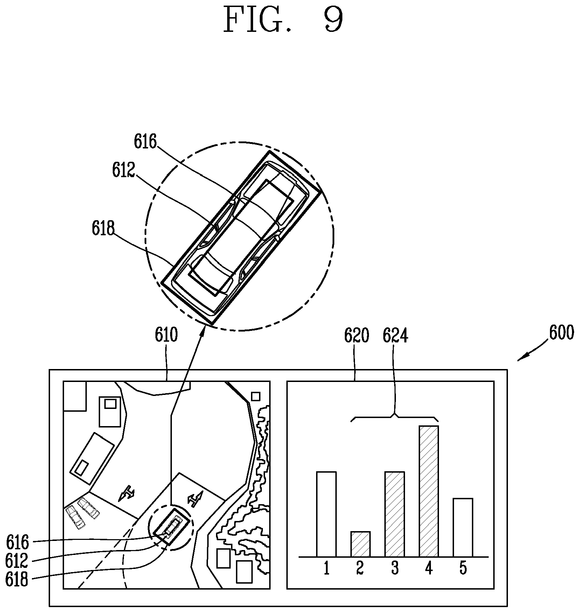

FIG. 8 illustrates an object search screen according to an example useful for understanding the invention and FIG. 9 illustrates an object search screen according to an embodiment of the present invention, respectively.

Referring to FIG. 8, an object search screen 600 includes a characteristic value input region 610 and a detection frequency display region 620. An interface allowing for inputting of a characteristic value of an object to be searched is provided in the characteristic value input region 610. Also, a monitored image may be displayed in the characteristic value input region 610. The characteristic value of the object detected from the monitored image and a detection frequency of the object having the characteristic value are displayed in the detection frequency display region 620. In this case, the detection frequency corresponding to the input characteristic value input in the characteristic value input region 610 may be distinguishably displayed in the detection frequency display region 620.

In an example, when an object 612 displayed in the monitored image is selected in the characteristic value input region 610, a detection frequency item 622 corresponding to a characteristic value 614 of the selected object is displayed in the detection frequency display region 620 such that it is discriminated from other detection frequency items. For example, the detection frequency item 622 may be discriminated by a shape or color from other detection frequency items.

Referring to FIG. 9, the user may directly input a plurality of characteristic values in the characteristic value input region 610 with reference to the object 612 displayed in the monitored image. For example, with reference to the object 612, the user may generate an item 616 indicating a first characteristic value of the object and an item 618 indicating a second characteristic value of the object. In this case, a detection frequency item 624 corresponding to a characteristic value between the first characteristic value and the second characteristic value may be distinguishably displayed in the detection frequency display region 620.

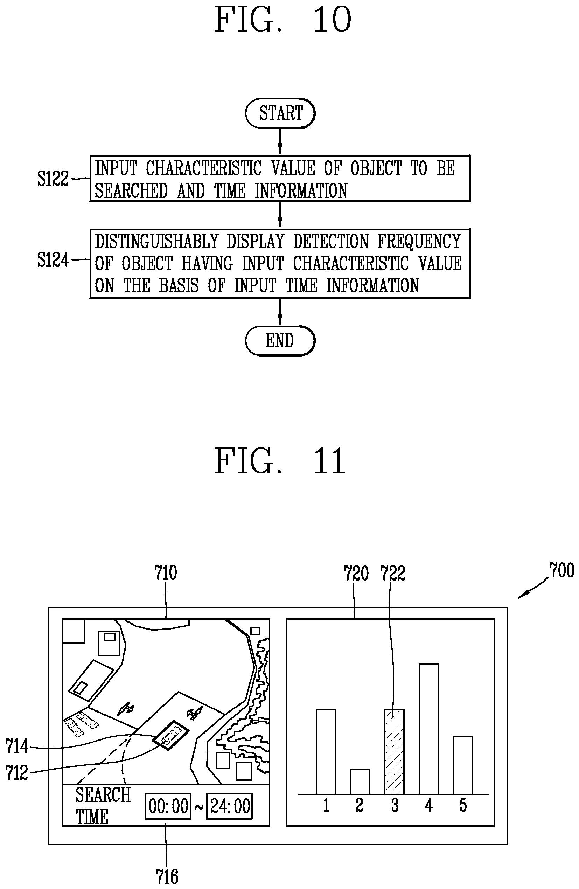

FIG. 10 is a flow chart illustrating a process of searching an object according to an example useful for understanding the present invention.

The monitoring control unit 120 receives a characteristic value of an object to be searched from a monitored image and information regarding a search time (S122). For example, the monitoring control unit 102 may receive a characteristic value of an object to be searched from a monitored image and information regarding a search time through the.user input unit 140.

Also, on the basis of the input time information, the monitoring control unit 120 displays the characteristic value of the object detected from the monitored image and a detection frequency of the object having the characteristic value through the output unit 150. Here, the monitoring control unit 120 displays the detection frequency of the object having the input characteristic value such that it is discriminated or distinguished (S124).

FIG. 11 is a view illustrating an object search screen according to an example useful for understanding the present invention.

Referring to FIG. 11, an object search screen 700 includes a characteristic value input region 710 and a detection frequency display region 720. An interface allowing for inputting of a characteristic value of an object to be searched is provided in the characteristic value input region 710. Also, a monitored image may be displayed in the characteristic value input region 710. The characteristic value of the object detected from the monitored image and a detection frequency of the object having the characteristic value are displayed in the detection frequency display region 720. In this case, the detection frequency corresponding to the input characteristic value input in the characteristic value input region 710 may be distinguishably displayed in the detection frequency display region 720.

In an example, the characteristic value input region 710 further includes an item for inputting time information. For example, the time information may include a start time and an end time, and a characteristic value of an objected detected from the monitored image and a detection frequency of the object having the characteristic value between the start time and the end time are displayed in the detection frequency display region 720. Also, when the object 712 displayed in the monitored image is selected in the characteristic value input region 710, a detection frequency item 722 corresponding to a characteristic value 714 of the that it is discriminated from the other detection frequency items.

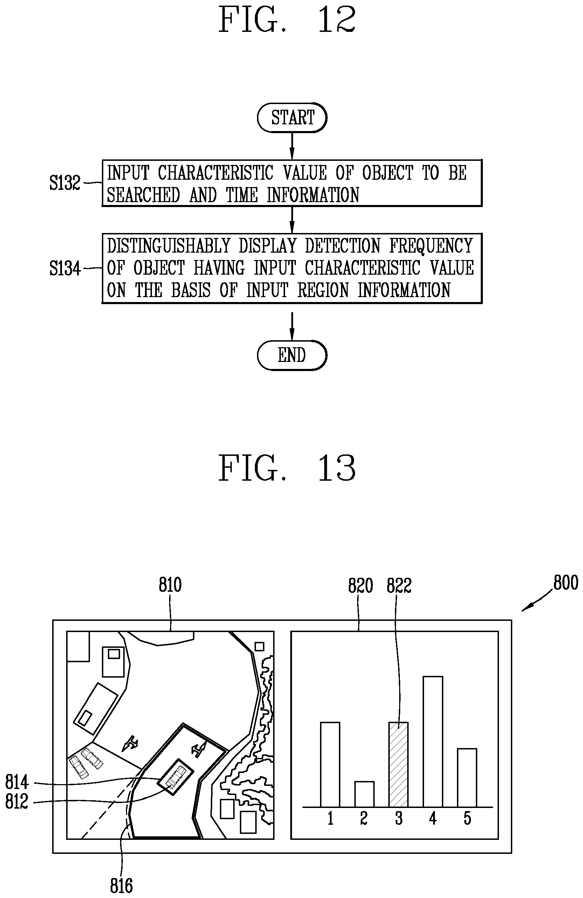

FIG. 12 is a flow chart illustrating a process of searching an object according to an embodiment of the present invention.

The monitoring control unit 120 receives a characteristic value of an object to be searched from a monitored image and information regarding a region to be searched (S132). For example, the monitoring control unit 120 may receive a characteristic value of an object to be searched from a monitored image and information regarding a region to be searched through the user input unit 140.

Also, on the basis of the input region information, the monitoring control unit 120 displays the characteristic value of the object detected from the monitored image and a detection frequency of the object having the characteristic value on the display unit. Here, the monitoring control unit 120 displays distinguishably the detection frequency of the object having the input characteristic value (S134).

FIG. 13 is a view illustrating an object search screen according to an embodiment of the present invention.

Referring to FIG. 13, an object search screen 800 includes a characteristic value input region 810 and a detection frequency display region 820. An interface allowing for inputting of a characteristic value of an object to be searched is provided in the characteristic value input region 810. Also, a monitored image may be displayed in the characteristic value input region 810. The characteristic value of the object detected from the monitored image and a detection frequency of the object having the characteristic value are displayed in the detection frequency display region 820. In this case, the detection frequency corresponding to the input characteristic value input in the characteristic value input region 810 may be distinguishably displayed in the detection frequency display region 820.

In an embodiment, the characteristic value input region 810 provides an interface allowing for inputting of region information. For example, the region information may be a looped curve including a polygonal shape, and the characteristic value of the object detected from the monitored image and a detection frequency of the object having the characteristic value in the input looped curve are displayed in the detection frequency display region 820. Also, when an object 812 displayed in the monitored image is selected in the characteristic value input region 810, a detection frequency item 822 corresponding to a characteristic value 814 of the selected object is displayed in the detection frequency display region 820, such that it is discriminated from the other detection frequency items.

Explanation of the present invention is merely an embodiment for structural or functional explanation, so the scope of the present invention should not be construed to be limited to the embodiments explained in the embodiment. That is, since the embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Thus, the present invention should be construed as including all the changes, equivalents, and substitutions included in the scope of the present invention.

**Claims**

1. A method for searching for an object by an image monitoring device in at least one frame, the method comprising:

detecting a plurality of objects from a monitored image;

calculating a characteristic value of each detected object, wherein the characteristic value is a numeric value indicating at least one of an object size and an object color according to a preset formula;

displaying, on a first region of a display unit, a characteristic value of each of the plurality of detected objects and a detection frequency of a number of times each object having said characteristic value is detected, wherein the detection frequency is calculated by normalizing the number of times each object is detected relative to the number of times another object is detected;

searching the at least one frame from the monitored image in which an object having a characteristic value selected from characteristic values displayed on the first region is detected; and

displaying, on a second region of the display unit, the at least one searched frames;

receiving a user's input of a first characteristic value and a second characteristic value of an object to be searched from the monitored image; and

distinguishably displaying a plurality of frequency items having a characteristic value between the first characteristic value and the second characteristic value in the first region of the display unit.

2. The method of claim 1, further comprising:

inputting information regarding a time for searching from the monitored image, before the displaying of the characteristic value and the detection frequency on the first region, wherein in the displaying of the characteristic value and the detection frequency on the first region, the normalized value of the object having the input characteristic value is distinguishably displayed on the first region on the basis of the input time information.

3. The method of claim 1, further comprising:

inputting information regarding a region to be searched from the monitored image, before the displaying of the characteristic value and the detection frequency on the first region, wherein in the displaying of the characteristic value and the detection frequency on the first region, the detection frequency of an object having the input characteristic value is distinguishably displayed on the first region on the basis of the input region information.

4. The method of claim 1, further comprising:

displaying the monitored image on a third region of the display unit, before the inputting of the characteristic value, wherein the inputting of the characteristic value includes calculating a characteristic value of an object selected from objects detected on the third region.

5. The method of claim 1, further comprising:

storing the detection frequency with respect to the characteristic value of an object detected from the monitored image, before the displaying of the characteristic value and the detection frequency on the first region.

6. The method of claim 1, wherein the characteristic value includes a velocity of an object detected from the monitored image.

7. The method of claim 1, wherein in the displaying of the characteristic value and the detection frequency on the first region, the characteristic value and the detection frequency are displayed as a graph on the first region.

8. The method of claim 1, wherein the displaying of the searched frame on the second region is displaying a frame which is selected from the searched frame.

9. The method of claim 1, wherein the searched frame displayed on the second region is a thumbnail image.

10. The method of claim 9, further comprising:

displaying an image in relation to a thumbnail image selected from the thumbnail images.

11. An image monitoring device comprising:

a controller configured to:

detect a plurality of objects from a monitored image; and

calculate a characteristic value of each detected object, wherein the characteristic value is a numeric value indicating at least one of an object size and an object color according to a preset formula; and

an output unit configured to display a characteristic value of each of the detected objects and a detection frequency of a number of times each object having said characteristic value is detected, wherein the detection frequency is calculated by normalizing the number of times each object is detected relative to the number of times another object is detected;
wherein the controller is further configured to:

search the at least one frame from the monitored image in which an object having a characteristic value selected from among characteristic values displayed on the first region is detected;
control the output unit to display the searched frame on a second region;
receive a user's input of a first characteristic value and a second characteristic value of an object to be searched from the monitored image; and
control the output unit to distinguishably display a plurality of detection value items having a characteristic value between the first characteristic value and the second characteristic value in the first region of the display unit.

## Patentansprüche

1. Verfahren zur Suche nach einem Objekt in wenigstens einem Einzelbild durch eine Bildüberwachungsvorrichtung, wobei das Verfahren aufweist:

Erfassen mehrerer Objekte auf einem überwachten Bild;
Berechnen eines Charakteristikwerts jedes erfassten Objekts, wobei der Charakteristikwert ein numerischer Wert ist, der eine Objektgröße und/oder eine Objektfarbe gemäß einer vorgegebenen Formel angibt;
Anzeigen eines Charakteristikwerts jedes der mehreren erfassten Objekte und einer Erfassungshäufigkeit einer Anzahl von Malen, mit denen jedes Objekt mit dem Charakteristikwert erfasst wird, auf einem ersten Bereich einer Anzeigeeinheit, wobei die Erfassungshäufigkeit berechnet wird, indem die Anzahl von Malen, die jedes Objekt erfasst wird, relativ zu der Anzahl von Malen, die ein anderes Objekt erfasst wird, normiert wird;
Suchen des wenigstens einen Einzelbilds aus dem überwachten Bild, in dem ein Objekt mit einem Charakteristikwert erfasst wird, der aus Charakteristikwerten, die auf dem ersten Bereich angezeigt werden, ausgewählt wurde; und
Anzeigen des wenigstens einen gesuchten Einzelbilds auf einem zweiten Bereich der Anzeigeeinheit;
Empfangen einer Benutzereingabe eines ersten Charakteristikwerts und eines zweiten Charakteristikwerts eines Objekts, das aus dem überwachten Bild gesucht werden soll; und

unterscheidbares Anzeigen mehrerer Häufigkeitselemente mit einem Charakteristikwert zwischen dem ersten Charakteristikwert und dem zweiten Charakteristikwert in dem ersten Bereich der Anzeigeeinheit.

2. Verfahren nach Anspruch 1, das ferner aufweist:

Eingeben von Informationen bezüglich einer Zeit zum Suchen in dem überwachten Bild, bevor der Charakteristikwert und die Erfassungshäufigkeit auf dem ersten Bereich angezeigt werden,
wobei bei der Anzeige des Charakteristikwerts und der Erfassungshäufigkeit auf dem ersten Bereich der normierte Wert des Objekts mit dem Eingangscharakteristikwert basierend auf der eingegebenen Zeitinformation auf dem ersten Bereich unterscheidbar angezeigt wird.

3. Verfahren nach Anspruch 1, das ferner aufweist:

Eingeben von Informationen bezüglich eines Bereichs der in dem überwachten Bild gesucht werden soll, bevor der Charakteristikwert und die Erfassungshäufigkeit auf dem ersten Bereich angezeigt werden,
wobei bei der Anzeige des Charakteristikwerts und der Erfassungshäufigkeit auf dem ersten Bereich die Erfassungshäufigkeit eines Objekts mit dem Eingangscharakteristikwert basierend auf der eingegebenen Bereichsinformation auf dem ersten Bereich unterscheidbar angezeigt wird.

4. Verfahren nach Anspruch 1, das ferner aufweist:

Anzeigen des überwachten Bilds auf einem dritten Bereich der Anzeigeeinheit, bevor der Charakteristikwert eingegeben wird,
wobei das Eingeben des Charakteristikwerts das Berechnen eines Charakteristikwerts eines Objekts umfasst, das aus Objekten ausgewählt wird, die auf dem dritten Bereich erfasst werden.

5. Verfahren nach Anspruch 1, das aufweist:

Speichern der Erfassungshäufigkeit in Bezug auf den Charakteristikwert eines Objekts, das aus dem überwachten Bild erfasst wird, bevor der Charakteristikwert und die Erfassungshäufigkeit auf dem ersten Bereich angezeigt werden.

6. Verfahren nach Anspruch 1, wobei der Charakteristikwert eine Geschwindigkeit eines in dem überwachten Bild erfassten Objekts umfasst.

**7.** Verfahren nach Anspruch 1, wobei der Charakteristikwert und die Erfassungshäufigkeit bei der Anzeige des Charakteristikwerts und der Erfassungshäufigkeit auf dem ersten Bereich als ein Diagramm auf dem ersten Bereich angezeigt werden.

**8.** Verfahren nach Anspruch 1, wobei das Anzeigen des gesuchten Einzelbilds auf dem zweiten Bereich ein Einzelbild anzeigt, der aus dem gesuchten Einzelbild ausgewählt wird.

**9.** Verfahren nach Anspruch 1, wobei das gesuchte Einzelbild, das auf dem zweiten Bereich angezeigt wird, ein Miniaturbild ist.

**10.** Verfahren nach Anspruch 9, das ferner aufweist:

Anzeigen eines Bilds in Bezug auf ein Miniaturbild, das aus den Miniaturbildern ausgewählt wird.

**11.** Bildüberwachungsvorrichtung, die aufweist:

eine Steuerung, die konfiguriert ist, um:

mehrere Objekte auf einem überwachten Bild zu erfassen; und
einen Charakteristikwert jedes erfassten Objekts zu berechnen, wobei der Charakteristikwert ein numerischer Wert ist, der eine Objektgröße und/oder eine Objektfarbe gemäß einer vorgegebenen Formel angibt; und

eine Ausgabeeinheit, die konfiguriert ist, um einen Charakteristikwert jedes der mehreren erfassten Objekte und einer Erfassungshäufigkeit einer Anzahl von Malen, mit denen jedes Objekt mit dem Charakteristikwert erfasst wird, anzuzeigen, wobei die Erfassungshäufigkeit berechnet wird, indem die Anzahl von Malen, die jedes Objekt erfasst wird, relativ zu der Anzahl von Malen, die ein anderes Objekt erfasst wird, normiert wird;
wobei die Steuerung ferner konfiguriert ist, um:

das wenigstens eine Einzelbild aus dem überwachten Bild zu suchen, in dem ein Objekt mit einem Charakteristikwert erfasst wird, der aus Charakteristikwerten, die auf dem ersten Bereich angezeigt werden, ausgewählt wurde; und
die Ausgabeeinheit zu steuern, um das gesuchte Einzelbild auf einem zweiten Bereich anzuzeigen;
eine Benutzereingabe eines ersten Charakteristikwerts und eines zweiten Charakteristikwerts eines Objekts, das aus dem überwachten Bild gesucht werden soll, zu empfangen; und
die Ausgabeeinheit zu steuern, um mehrere Häufigkeitselemente mit einem Charakteristikwert zwischen dem ersten Charakteristikwert und dem zweiten Charakteristikwert in dem ersten Bereich der Anzeigeeinheit unterscheidbar anzuzeigen.

**Revendications**

**1.** Procédé pour rechercher un objet par un dispositif de contrôle d'image dans au moins une trame, le procédé comprenant :

la détection d'une pluralité d'objets depuis une image contrôlée ;
le calcul d'une valeur caractéristique de chaque objet détecté, dans lequel la valeur caractéristique est une valeur numérique indiquant au moins l'une parmi une taille d'objet et une couleur d'objet selon une formule prédéfinie ;
l'affichage, sur une première région d'une unité d'affichage, d'une valeur caractéristique de chacun parmi la pluralité d'objets détectés et d'une fréquence de détection d'un nombre de fois que chaque objet possédant ladite valeur caractéristique est détecté, dans lequel la fréquence de détection est calculée par normalisation du nombre de fois que chaque objet est détecté par rapport au nombre de fois où un autre objet est détecté ;
la recherche de l'au moins une trame depuis l'image contrôlée dans laquelle un objet possédant une valeur caractéristique sélectionnée parmi les valeurs caractéristiques affichées sur une première région est détecté ; et
l'affichage, sur une deuxième région de l'unité d'affichage, des au moins une trames recherchés ;
la réception d'une entrée d'utilisateur d'une première valeur caractéristique et d'une deuxième valeur caractéristique d'un objet à rechercher depuis l'image contrôlée ; et
l'affichage distinctif d'une pluralité d'éléments de fréquences possédant une valeur caractéristique entre la première valeur caractéristique et la deuxième valeur caractéristique dans la première région de l'unité d'affichage.

**2.** Procédé de la revendication 1, comprenant en outre :

l'entrée d'informations concernant une région à rechercher depuis l'image contrôlée, avant l'affichage de la valeur caractéristique et de la fréquence de détection sur la première région,

dans lequel dans l'affichage de la valeur caractéristique de la fréquence de détection sur la première région, la valeur normalisée de l'objet possédant la valeur caractéristique entrée est affiché distinctivement sur la première région en fonction des informations de région entrées.

**3.** Procédé de la revendication 1, comprenant en outre :

l'entrée d'informations concernant une région à rechercher depuis l'image contrôlée, avant l'affichage de la valeur caractéristique de la fréquence de détection sur la première région, dans lequel dans l'affichage de la valeur caractéristique de la fréquence de détection sur la première région, la fréquence de détection d'un objet possédant la valeur caractéristique entrée est affichée distinctivement sur la première région en fonction des informations de région entrées.

**4.** Procédé de la revendication 1, comprenant en outre :

l'affichage de l'image contrôlée sur une troisième région de l'unité d'affichage, avant l'entrée de la valeur caractéristique, dans lequel l'entrée de la valeur caractéristique comprend le calcul d'une valeur caractéristique d'un objet sélectionné parmi des objets détectés sur la troisième région.

**5.** Procédé de la revendication 1, comprenant en outre :

le stockage de la fréquence de détection par rapport à la valeur caractéristique d'un objet détecté depuis l'image contrôlée, avant l'affichage de la valeur caractéristique et de la fréquence de détection sur la première région.

**6.** Procédé de la revendication 1, dans lequel la valeur caractéristique comporte une vitesse d'un objet détecté depuis les images contrôlées.

**7.** Procédé de la revendication 1, dans lequel dans l'affichage de la valeur caractéristique et de la fréquence de détection sur la première région, la valeur caractéristique et la fréquence de détection sont affichées sous forme de graphique sur la première région.

**8.** Procédé de la revendication 1, dans lequel l'affichage de la trame recherchée sur la deuxième région affiche une trame sélectionnée depuis la trame recherchée.

**9.** Procédé de la revendication 1, dans lequel la trame recherchée affichée sur la deuxième région est une vignette.

**10.** Procédé la revendication 9, comprenant en outre :

l'affichage d'une image relative à une vignette sélectionnée parmi les vignettes.

**11.** Dispositif de contrôle d'image comprenant :

un contrôleur configuré pour :

détecter une pluralité d'objets depuis une image contrôlée ; et calculer une valeur caractéristique de chaque objet détecté, dans lequel la valeur caractéristique est une valeur numérique indiquant au moins l'une parmi la taille de l'objet et la couleur de l'objet selon une formule prédéterminée ; et

une unité de sortie configurée pour afficher une valeur caractéristique de chaque objet détecté et une fréquence de détection d'un nombre de fois que chaque objet possédant ladite valeur caractéristique est détecté, dans lequel la fréquence de détection est calculée par normalisation du nombre de fois que chaque objet est détecté par rapport au nombre de fois ou un autre objet est détecté ; dans lequel le contrôleur est en outre configuré pour :

rechercher l'au moins une trame depuis l'image contrôlée dans laquelle un objet possédant une valeur caractéristique sélectionnée parmi des valeurs caractéristiques affichées sur la première région est détecté ; contrôler l'unité de sortie pour afficher le trame recherché sur une deuxième région ; recevoir une entrée d'utilisateur d'une première valeur caractéristique et d'une deuxième valeur caractéristique d'un objet à rechercher depuis l'image contrôlée ; et contrôler l'unité de sortie pour afficher de manière distinctive une pluralité d'éléments de valeur de détection possédant une valeur caractéristique entre la première valeur caractéristique et la deuxième valeur caractéristique dans la première région de l'unité d'affichage.

# FIG. 1

10

200

**IMAGE OBTAINING DEVICE**

100

**IMAGE MONITORING DEVICE**

300

**OUTPUT DEVICE**

# FIG. 2

105

**COMMUNICATION UNIT**

110

**IMAGE PROCESSING UNIT**

130

**STORAGE UNIT**

120

**MONITORING CONTROL UNIT**

140

**USER INPUT UNIT**

150

**OUTPUT UNIT**

# FIG. 3A

| LINK INFORMATION |
| --- |
| DATA BODY |

# FIG. 3B

| LINK INFORMATION |
| --- |
| DATA BODY<br><br>· IMAGE OBTAINED<br>  ENVIRONMENT INFORMATION<br>· OBJECT DETECTION<br>  INFORMATION<br>· EVENT DETECTION<br>  INFORMATION<br>      ⋮ |

# FIG. 4

| CHARACTERISTIC VALUE | DETECTION NUMBER | FRAME NUMBER | FRAME #1 | • • • | FRAME #n |
|---|---|---|---|---|---|

400

410  420  430  440

# FIG. 5

START

S200 — DISPLAY CHARACTERISTIC VALUE AND DETECTION FREQUENCY OF OBJECT HAVING CHARACTERISTIC VALUE

S300 — SEARCH FRAME IN WHICH OBJECT HAVING SELECTED CHARACTERISTIC VALUE IS DETECTED

S400 — DISPLAY SEARCHED FRAME

END

# FIG. 6

510        512        500

520

522

# FIG. 7

START

S112 — INPUT CHARACTERISTIC VALUE OF OBJECT TO BE SEARCHED

S122 — DISTINGUISHABLY DISPLAY DETECTION FREQUENCY OF OBJECT HAVING INPUT CHARACTERISTIC VALUE

END

# FIG. 8

# FIG. 9

# FIG. 10

START

S122 — INPUT CHARACTERISTIC VALUE OF OBJECT TO BE SEARCHED AND TIME INFORMATION

S124 — DISTINGUISHABLY DISPLAY DETECTION FREQUENCY OF OBJECT HAVING INPUT CHARACTERISTIC VALUE ON THE BASIS OF INPUT TIME INFORMATION

END

# FIG. 11

710     720  722     700

714
712

SEARCH TIME  00:00 ~ 24:00

716

1  2  3  4  5

# FIG. 12

START

S132 — INPUT CHARACTERISTIC VALUE OF OBJECT TO BE SEARCHED AND TIME INFORMATION

S134 — DISTINGUISHABLY DISPLAY DETECTION FREQUENCY OF OBJECT HAVING INPUT CHARACTERISTIC VALUE ON THE BASIS OF INPUT REGION INFORMATION

END

# FIG. 13

**EP 2 629 516 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090136141 A